# EUROPEAN PATENT SPECIFICATION

(11) **EP 3 889 478 B1**
(45) Date of publication and mention of the grant of the patent: **23.07.2025**
(21) Application number: 19890163.9
(22) Date of filing: 19.11.2019
(51) Int. Cl.: F16K 11/065, F25B 13/00

(54) **FLOW PATH SWITCHING VALVE**
STRÖMUNGSWEGUMSCHALTVENTIL
SOUPAPE DE COMMUTATION DE TRAJET D'ÉCOULEMENT

(30) Priority: 29.11.2018 JP 2018223243
(43) Date of publication of application: 06.10.2021
(73) Proprietor: Fujikoki Corporation, Tokyo 158-0082 (JP)
(72) Inventor: KIBUNE, Hitoshi, Tokyo 158-0082 (JP); MORITA, Noriyuki, Tokyo 158-0082 (JP)
(74) Representative: Ter Meer Steinmeister & Partner
(86) International application number: PCT/JP2019/045332
(87) International publication number: WO 2020/110840

(56) References cited:
- CN-A- 102 954 243
- CN-A- 108 869 795
- JP-A- 2008 512 609
- JP-A- 2009 109 063
- JP-A- 2017 150 645
- JP-A- 2018 044 666
- JP-A- 2018 044 666
- JP-A- 2018 194 032
- JP-A- 2019 065 895
- US-A1- 2017 299 233

## Description

### FIELD OF INVENTION

The present invention relates to a flow path switching valve used in, for example, heat-pump type air conditioning systems, and particularly relates to a flow path switching valve to improve rigidity of valve bodies to improve sealing property thereof.

### BACKGROUND

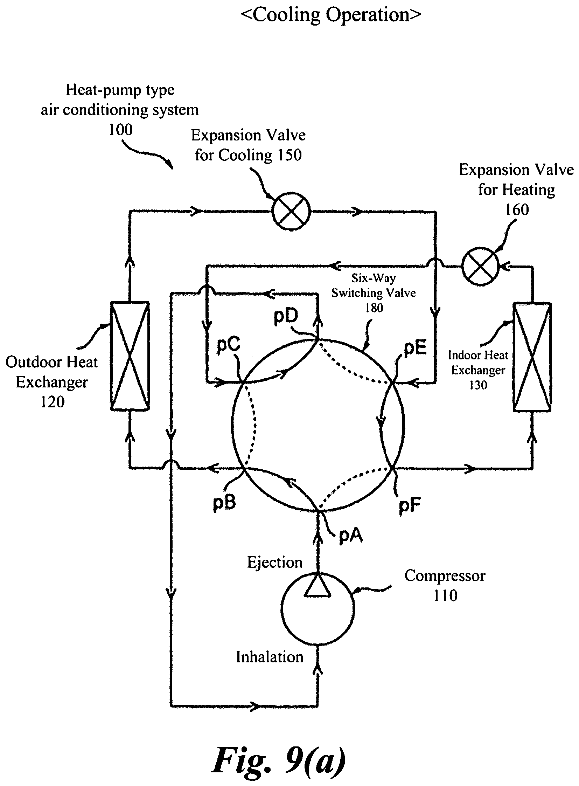

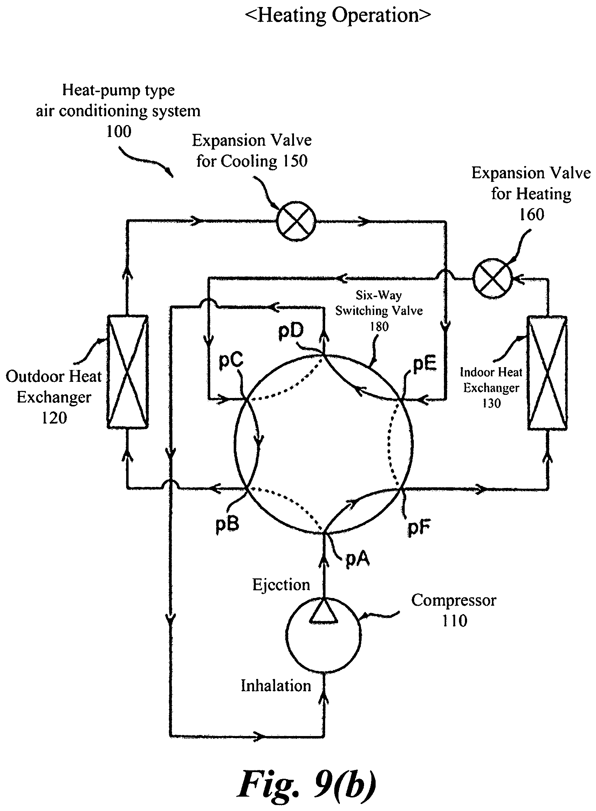

Generally, heat-pump type air conditioning systems include a flow path switching valve such as a four-way switching valve and a flow path switching valve in addition to a compressor, an outdoor heat exchanger, an indoor heat exchanger, and an expansion valve, etc. For example, a flow path switching valve is applied in the heat-pump type air conditioning system indicated in Figs. 9(a) and (b).

As illustrated in Figs. 9(a) and 9(b), a heat-pump type air conditioning system 100 performs the switching of operation modes (cooling operation and heating operation) at a flow path switching valve 180. Basically, the heat-pump type air conditioning system 100 includes a compressor 110, an outdoor heat exchanger 120, an indoor heat exchanger 130, a cooler expansion valve 150, and a heater expansion valve 160, and the flow path switching valve 180 that is the flow path switching valve is arranged between them. The flow path switching valve 180 is a valve having six ports pA, pB, pC, pD, pE, and pF. Each of said components is connected a flow path formed, for example, by conduits (pipings).

As illustrated in Fig. 9(a), in the heat-pump type air conditioning system 100, when a cooling operation mode is selected, refrigerants with high temperature and high pressure are discharged from the compressor 110 and are directed to the outdoor heat exchanger 120 via ports pA and pB of the flow path switching valve 180. In the outdoor heat exchanger 120, heat of the refrigerants directed to the outdoor heat exchanger 120 is exchanged with outdoor air, and the refrigerants are condensed and become gas-liquid two-phase refrigerants with high pressure or liquid refrigerants, and are directed to the cooler expansion valve 150.

The refrigerants with high pressure are depressurized by the cooler expansion valve 150, and the depressurized refrigerants are introduced into the indoor heat exchanger 130 via the ports pE and pF of the flow path switching valve 180. Heat of the refrigerants introduced into the indoor heat exchanger 130 is exchanged (cooled) with outdoor air, and the refrigerants are evaporated and become the refrigerant with low temperature and low pressure and are returned to the suction-side of the compressor 110 via the ports pC and pD of the flow path switching valve 180.

On the other hand, as illustrated in Fig. 9(b), in the heat-pump type air conditioning system 100, when a heating operation mode is selected, the refrigerants with high temperature and high pressure are discharged from the compressor 110 and are directed to the indoor heat exchanger 120 via ports pA and pF of the flow path switching valve 180. In the indoor heat exchanger 130, heat of the refrigerants directed is exchanged with outdoor air, and the refrigerants are condensed (heated) and become gas-liquid two-phase refrigerants with high pressure or liquid refrigerants, and are directed to the heater expansion valve 160.

The refrigerants with high pressure are depressurized by the heater expansion valve 160, and the depressurized refrigerants are introduced into the outdoor heat exchanger 120 via the ports pC and pB of the flow path switching valve 180. Heat of the refrigerants introduced into the outdoor heat exchanger 120 is exchanged with outdoor air, and the refrigerants are evaporated and become the refrigerant with low temperature and low pressure and are returned from the outdoor heat exchanger 120 to the suction-side of the compressor 110 via the ports pE and pD of the flow path switching valve 180.

Slide-type flow path switching valves are known as the flow path switching valves incorporated in the aforementioned heat-pump type air conditioning systems (for example, Patent Document 1). In the slide-type flow path switching valve described in Patent Document 1, a main valve body slides and moves to switch flow paths. In addition, the main valve body of the slide-type flow path switching valve may be two slide valve bodies, for example, a high-pressure side slide valve body and a low-pressure side slide valve body combined together (Patent Document 2).

### PRIOR ART DOCUMENT

### PATENT DOCUMENT

Patent Document 1: Japanese Laid-Open Publication H8-170864
Patent Document 2: Japanese Laid-Open Publication 2018-044666
CN 108 869 795 describes a flow path change-over valve comprising a main valve housing, a valve seat surface, three ports opened on a valve seat surface, and a rotation valve core arranged on the valve seat surface. A low-pressure-side U-shaped turning communication path is formed in the rotation valve core to selectively communicate the ports, the valve seat surface is regarded as the lower side, the rotation valve core is formed by segmentation of a low-pressure path dividing part and a matrix portion, the low-pressure path dividing part forms the lower side or inner circumferential side portion of the low-pressure-side U-shaped turning communication path through division, the matrix portion forms the upper side or outer circumferential side portion of the low-pressure-side U-shaped turning communication path through division, the shape of a cross section of the low-pressure-side U-shaped turning communication path is set as a circular shape or an oval shape similar to the circular shape, and the cross section is set to be equivalent all over the total length from one end to the other end.
JP 2017 150645 A describes a six-way switching valve, wherein in each flow passage switching valve, a poppet type main valve elements are moved in synchronization with each other in main valve chambers defined by cylindrical main valve housing; thus, communication between ports can be switched. US 2017/299233 A1 describes a six-way directional valve, an outdoor unit having the same and an air conditioner are provided. The six-way directional valve includes: a valve body, defining a valve cavity therein, the valve cavity having a first side wall and a second side wall disposed oppositely to each other, the valve body being provided with a first connecting pipe to a sixth connecting pipe; a valve spool, movably disposed in the valve cavity, a first chamber being defined between the valve spool and the first side wall, a second chamber being defined between the valve spool and the second side wall, and a third chamber being defined between the valve spool, the first side wall and the second side wall; and a pilot valve assembly.

Document JP 2018 044666 A is considered to be the closest prior art and discloses a flow path switching valve according to the preamble of claim 1.

### SUMMARY OF INVENTION

### PROBLEMS TO BE SOLVED BY INVENTION

In recent year, concerns for energy saving have grown, and it is demanded to prevent initial leakage and leakage by durability deterioration (valve leakage) in flow path switching valves for switching flow paths, such as six-way switching valves, to further improve efficiency of the heat-pump type air conditioning systems. For example, in the slide-type flow path switching valve having a high-pressure side slide valve body and a low-pressure side slide valve body, high pressure is applied to the high-pressure side slide valve body. Accordingly, a sealing surface of the high-pressure side slide valve body easily deforms, and there is a concern that valve leakage occurs. Therefore, conventionally, development of flow path switching valve to prevent valve leakage have been urgent.

The present invention provides a flow path switching valve according to claim 1 and is suggested to solve the aforementioned problems, and objective thereof is to provide a flow path switching valve that can suppress deformation of the sealing surface and prevent valve leakage by improving rigidity of the high-pressure side slide valve body, and that contributes to improvement of efficiency of the heat-pump type air conditioning system.

### MEANS TO SOLVE THE PROBLEM

To achieve the above objective, a flow path switching valve according to claim 1 is provided.

### EFFECT OF INVENTION

According to the present invention, a flow path switching valve that can suppress deformation of the sealing surface and prevent valve leakage by improving rigidity of the high-pressure side slide valve body, and that contributes to improvement of efficiency of the heat-pump type air conditioning system can be obtained.

### BRIEF DESCRIPTION OF DRAWINGS

Fig. 1 is a vertical cross-sectional diagram illustrating a flow path switching valve during a cooling operation in a first design which is not part of the present invention.
Fig. 2 is a vertical cross-sectional diagram illustrating a flow path switching valve during a heating operation in a first design which is not part of the present invention.
Fig. 3 is a main-section-enlarged vertical cross-sectional diagram illustrating an enlarged view of the flow path switching valve in Fig. 1.
Fig. 4 is a main-section-enlarged horizontal cross-sectional diagram along A-A line in Fig. 3.
Fig. 5 is a main-section-enlarged perspective diagram illustrating an enlarged view of a main section of the flow path switching valve in Fig. 1.
Fig. 6 is a cross-sectional diagram along U-U line in Fig. 1.
Fig. 7 is a perspective view illustrating a main valve body and a connector of the flow path switching valve.
Fig. 8 is a main-section-enlarged vertical cross-sectional diagram illustrating an enlarged view of a main section of the flow path switching valve in Fig. 1 in another example, representing an embodiment of the present invention.
Fig. 9(a) is a schematic configuration diagram illustrating one example of a heat-pump type air conditioning system using the flow path switching valve of the present disclosure as a flow path switching valve during cooling operation, and Fig. 9(b) is a schematic configuration diagram illustrating one example of a heat-pump type air conditioning system using the flow path switching valve of the present disclosure as a flow path switching valve during heating operation.

### EMBODIMENTS

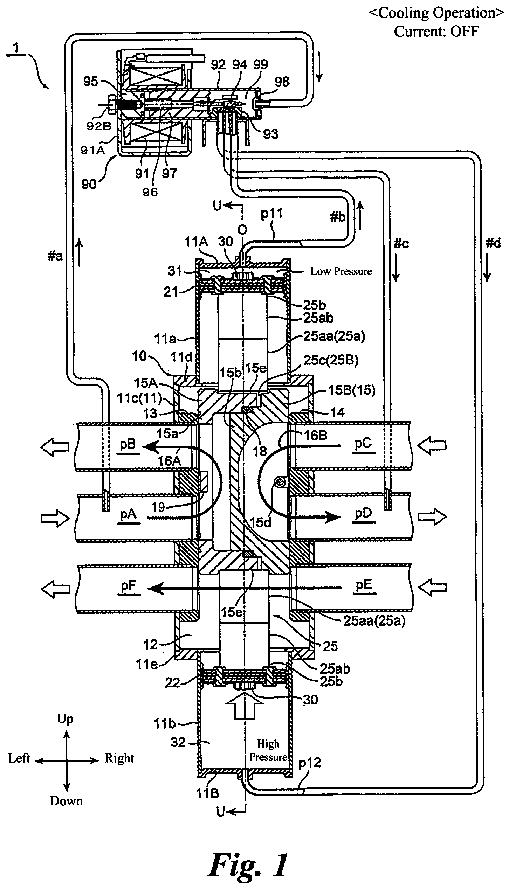

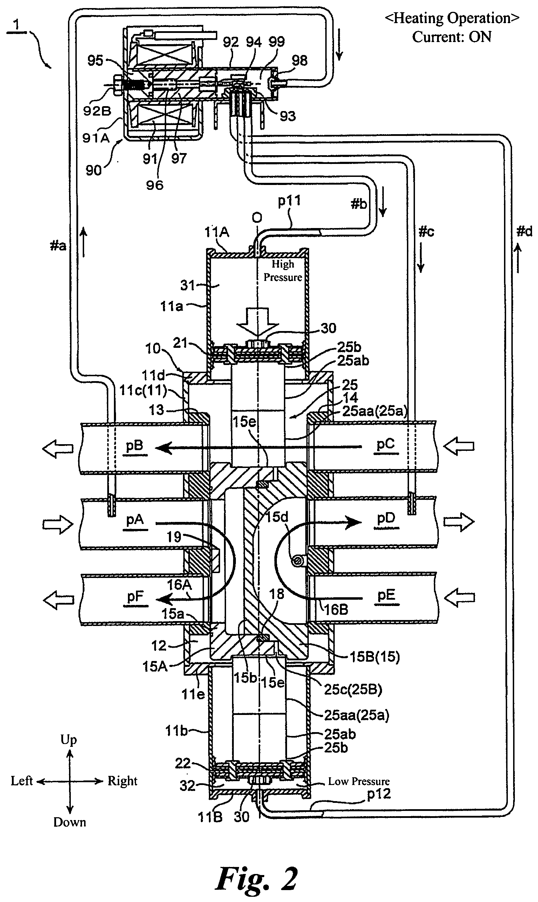

In below, designs are described with the reference to figures. Figs. 1 and 2, not representing the present invention, are vertical cross-sectional diagrams illustrating a flow path switching valve in a first design in which Fig. 1 illustrates a diagram during a cooling operation and Fig. 2 illustrates a diagram during a heating operation.

In the present specification, descriptions representing positions and directions such as above, below, right, left, front, and back, are presented according to the figures for convenience to avoid the descriptions to become complicated, and they do not necessarily indicate actual positions and directions when incorporated in a heat-pump type air conditioning system, etc. Furthermore, in figures, gaps formed between components or distances between components may be provided smaller or larger relative to dimensions of each component to facilitate understandings of the invention and to facilitate drawings of the figures.

### [First Embodiment]

### [Configuration]

A flow path switching valve 1 according to a first embodiment is, for example, a slide-type flow path switching valve 18 used in a heat-pump type air conditioning system 100 illustrated in Figs. 9(a) and 9(b).

As illustrated in Figs. 1 and 2, not representing the present invention, basically, the flow path switching valve 1 according to the first embodiment includes a cylindrical flow path valve main body 10 and a single electromagnetic four-way pilot valve as a pilot valve. Note that the flow path switching valve 1 of the first embodiment is a six-way switching valve including six ports, and each of the six ports corresponds with ports pA to pF of the flow path switching valve 180 and is labeled by the same signs.

### [Configuration of Flow Path Valve Main Body 10]

The flow path valve main body 10 has a main valve housing 11 made of metal such as brass or stainless steel, etc. A first operation chamber 31, a first piston 21, a main valve chamber 12, a second piston 22, and a second operation chamber 32 are arranged in the main valve housing 11 from one end (upper stream end) in this order. Spring-loaded packings are attached to the first piston 21 and the second piston 22, and an outer circumference of the spring-loaded packing is pressure-welded on an inner circumferential surface of the main valve housing 11 to airtightly divide the main valve housing 11.

The main valve housing 11 has a body 11c with large diameter. An upper connection lid 11d with thick disc-shape is airtightly attached to an upper opening of the body 11c. A center hole is provided to the upper connection lid 11d. A first piston portion 11a formed of a pipe member with short diameter is airtightly adhered to the center hole of the upper connection lid 11d by brazing or welding, etc. (by brazing in the following embodiment). The first piston 21 is arranged to the first piston portion 11a.

A lower connection lid 11e with thick disc-shape is airtightly attached a lower opening of the body 11c. A center hole is also provided to the lower connection lid 11e. A second piston portion 11b formed of a pipe member with short diameter is airtightly adhered to the center hole of the lower connection lid 11e by brazing. The second piston 22 is arranged to the second piston portion 11b.

An upper end lid member 11A with thin disc-shape is airtightly adhered to an upper end of the first piston portion 11a of the main valve housing 11 by brazing, etc. The upper end lid member 11A defines the first operation chamber 31 in which volume thereof is variable. A lower end lid member 11B with thin disc-shape is airtightly adhered to a lower end of the second piston portion 11b of the main valve housing 11 by brazing, etc.

The lower end lid member 11B defines the second operation chamber 32 in which volume thereof is variable. A port p11 and a port p12 are attached to a center of the upper end lid member 11A and a center of the lower end lid member 11B, respectively. The ports p11 and p12 are ports for introducing and discharging liquid with high pressure to the first operation chamber 31 and the second operation chamber 32.

A main valve chamber 12 of the main valve housing 11 is a space provided inside the main valve housing 11. Total of six ports are provided to the main valve chamber 12. For example, a first main valve seat 13 made of metal is airtightly adhered to an inner circumference of the main valve housing 11 at left center of the main valve chamber 12 by brazing, etc.

A surface (right surface) of the first main valve seat 13 is a flat valve seating surface. Three ports formed of pipe joints extending leftward are opened and aligned vertically (that is, aligned in the axial direction O) at substantially even intervals on the valve seating surface of the first main valve seat 13. The three ports are a port pB, a port pA and a port pF from the upper end-side.

Furthermore, for example, a second main valve seat 14 made of metal is airtightly adhered to the inner circumference of the main valve housing 11 at right center of the main valve chamber 12 (a position facing the first main valve seat 13, that is, a position opposite the first main valve seat 13 across an axis O) by brazing, etc. A surface (left surface) of the second main valve seat 14 is a flat valve seating surface. Three ports formed of pipe joints extending rightward are opened and aligned vertically (that is, aligned in the axial direction O) at substantially even intervals on the valve seating surface of the second main valve seat 14. The three ports are a port pC, a port pD and a port pE from the upper end-side.

The port pB, port pA, and port pF provided to the first main valve seat 13, and the ports pC, port pD, and port pE provided to the second main valve seat 14 are arranged at positions facing each other (opposite positions across the axis O) . In the present examples, ports pA to pF provided to the first main valve seat 13 and the second main valve seat 14 have substantially same diameters.

A slide-type main valve body 15 is arranged movably in the axial direction O (vertical direction) in the body 11c of the main valve housing 11. The main valve body 15 is a rectangular valve body having an annular sealing surface in race-track shape. Both side surfaces (left surface and right surface) of the main valve body 15 are freely slidably in contact with the valve seating surfaces of the first main valve seat 13 and the second main valve seat 14, respectively. In the present examples, dimensions of the main valve body 15 in the right-left direction and the front-back direction are set to be equivalent to or slightly larger than outer diameters of the first piston portion 11a and the second piston portion 11b of the main valve housing 11.

The main valve body 15 is formed of, for example, synthetic resins, and is formed by two components of a high-pressure side slide valve body 15A at the first main valve body 13-side (left side) and a low-pressure side slide valve body 15B at the second main valve body 13-side (right side).

The high-pressure side slide valve body 15A is a tubular member which does not have a ceiling on the right side (second main valve seat 14-side). The high-pressure side slide valve body 15A is arranged to surround an end(a tip portion at the first main valve seat 13-side) on the left side of the low-pressure side slide valve body 15B from the outer side. An inner brim 15a protrudes toward the inside from the left-surface side of the high-pressure side slide valve body 15A (the side opposite to the low-pressure side slide valve body 15B-side). An opening in a size that can selectively communicate two adjacent ports (pB and pA, or pA and pF) among three ports opened on the valve seating surface of the first main valve seat 13 is defined in the inner brim 15a. A left end surface (an end surface at the first main valve seat 13-side) of the inner brim 15a is the annular sealing surface which is freely slidably in contact with the valve seating surface of the first main valve seat 13.

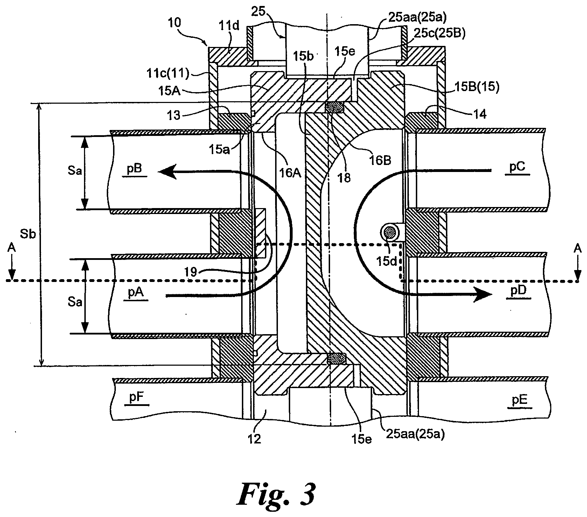

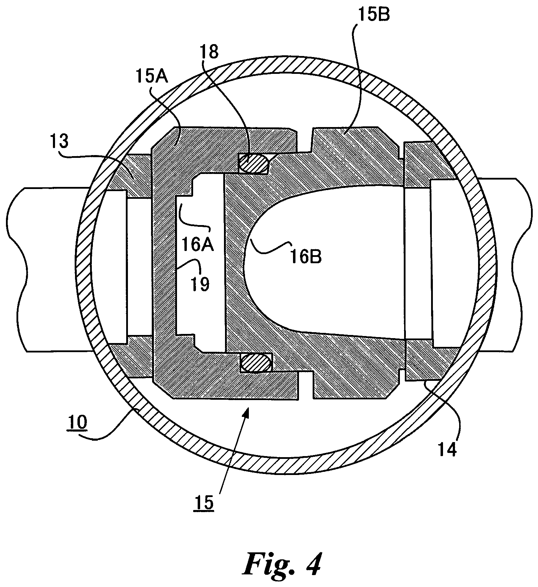

As illustrated in Figs. 3 to 5, not representing the present invention, a bridge 19, which connects inner circumferential surfaces of the high-pressure side slide valve body 15A facing each other in a direction orthogonal to the axis O of the main valve chamber 12, is provided on the inner circumferential surfaces. The bridge 19 is formed integrally with the high-pressure side slide valve body 15A. The bridge 19 extends in a direction orthogonal to the axial direction of the main valve chamber 12 and is a direction parallel with the seating surface of the first main valve seat 13, and connects the inner circumferential surfaces of the high-pressure side slide valve body 15A facing each other. Fig. 4 is a main-section-enlarged horizontal cross-sectional diagram along A-A line in Fig. 3.

In the high-pressure side slide valve body 15A, an end at the low-pressure side slide valve body 15B-side is a tip portion, and an end opposite to the tip portion (first main valve seat 13-side) is a base portion. As illustrated in Figs. 3 and 4, two openings which are respectively communicated with adjacent two ports are provided in the base portion of the high-pressure side slide valve body 15A, and the bridge 19 is formed of an end surface sandwiched by circular arcs of two openings. That is, the bridge 19 provided in the base portion of the high-pressure side slide valve body 15A. Note that, in the present example, although the openings formed in the base portion of the high-pressure side slide valve body 15A have the same shape as the ports to which the openings are communicated, the shapes of the openings may be different from the shape of the ports as long as required flow amount is ensured.

The convex portion 15b protruding toward the high-pressure side slide valve body 15A-side is provided in the low-pressure side slide valve body 15B. The convex portion 15b has an outer diameter substantially equal to or slightly smaller than an inner diameter of the high-pressure side slide valve body 15A and is formed integrally with the low-pressure side slide valve body 15B. A high-pressure side U-turn path 16A is defined in a space surrounded by an inner circumferential surface of the high-pressure side slide valve body 15A, and the convex portion 15b. The high-pressure side U-turn path 16A may selectively communicate two adjacent ports (pB and pA, or pA and pF) among three ports opened on the valve seating surface of the first main valve seat 13. Fluids with relatively high pressure may be introduced in the high-pressure side U-turn path 16A.

Meanwhile, a low-pressure side U-turn path 16B is defined at the right surface side (side opposite to the high-pressure side slide valve body 15A) of the low-pressure side slide valve body 15B. The low-pressure side U-turn path 16B is formed of a bowl-shaped concavity that can selectively communicate two adjacent ports (pC and pD, or pD and pE) among three ports opened on the valve seating surface of the second main valve seat 14. Fluids with relatively low pressure may be introduced in the low-pressure side U-turn path 16B.

In the present embodiment, by moving the main valve body 15 inside the main valve chamber 12, two ports among three ports are selectively communicated via the high-pressure side U-turn path 16A. At the same time, two ports among another three ports are selectively communicated via the low-pressure side U-turn path 16B, and the other one port among three ports and the other one port among another three ports may be selectively communicated via the main valve housing 11.

The high-pressure side slide valve body 15A and the low-pressure side slide valve body 15B are slightly freely movable relative to each other in the right-left direction and are freely movable integrally in the vertical direction. Here, the right-left direction is a direction which is orthogonal to the axis O and in which the ports pB, pA, and pF provided in the first main valve seat 13, and the ports pC, pD, and pE provided in the second main valve seat 14 face each other. In addition, the vertical direction is the axial direction O.

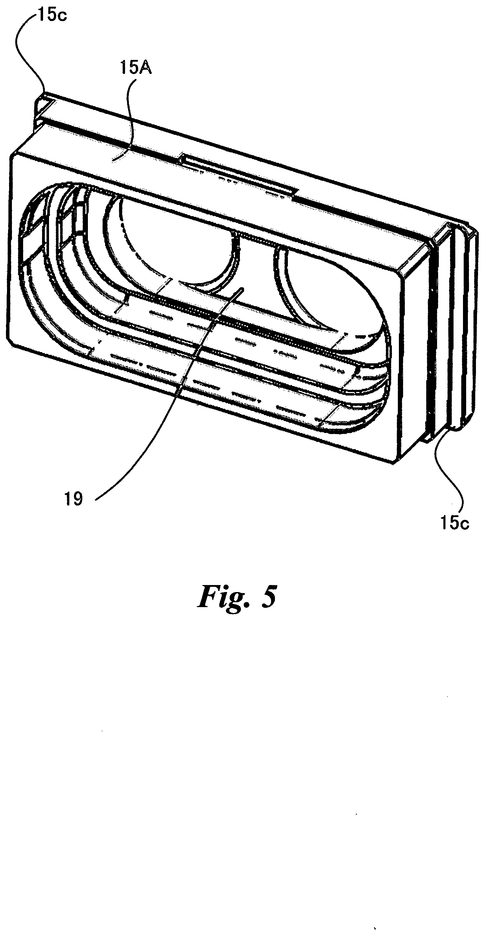

In the illustrated example, an O-ring 18 that is an annular sealing member is interposed between a step (inner circumferential step) formed on the inner circumferential surface of the high-pressure side slide valve body 15A on right-end side and a step (outer circumferential step) formed on the outer circumferential surface of the convex portion 15b of the low-pressure side slide valve body 15B. The O-ring 18 is arranged between the high-pressure side U-turn path 16A and the main valve chamber 12. Note that, although the high-pressure side slide valve body 15A includes an outer brim 15c to improve operation stability thereof as illustrated in Fig. 5, the outer brim 15c may not be provided as illustrated in Fig. 3, etc.

The O-ring 18 seals the high-pressure side U-turn path 16A and the main valve chamber 12. Fluids (refrigerants) with high pressure is introduced into an inner portion of the O-ring 18 from the port (high-pressure port at discharge side) pA via the high-pressure side U-turn path 16A. Note that sealing members such as lip seals may be used instead of the O-ring 18, and shapes of the O-ring 18 and other sealing members are not limited to rings and may be quadrilaterals.

As it is apparent from Figs. 1, 2 and 3, when viewing from the right-left direction (direction orthogonal to the first main valve seat 13), an area Sb in the high-pressure side valve body 15A at the right-surface side of the high-pressure side valve body 15A is larger than an area Sa in the high-pressure side valve body 15A at the left-surface side of the high-pressure side valve body 15A. The area Sb is a projected area inside a diameter of the O-ring 18 relative to plane perpendicular to the right-left direction.

The area Sa is a projected area (area substantially the same as a projected are of the inner brim 15a) inside the annular sealing surface at the first main valve seat 13-side relative to the plane perpendicular to the right-left direction (direction orthogonal to the valve seating surface of the first main valve seat 13), and is an area which pressure in the left direction is not applied to (the right side of) the high-pressure side slide valve body 15A. In the present embodiment, since a sliding surface of the bridge 19 is a sealing surface, a shape of the area Sa is annular, and the area Sa becomes an interior of the inner brim 15a when the bridge 19 is floated from the valve seating surface.

That is, differential pressure that acts on the high-pressure side slide valve body 15A is produced due to a difference (Sb-Sa) in the areas of the high-pressure side slide valve body 15A at the right-surface side and the left-surface side. By this differential pressure, (the annular sealing surface of) a left surface of the high-pressure side slide valve body 15A is pressed against the valve seating surface of the first main valve seat 13. That is, the left surface of the high-pressure side slide valve body 15A is pressed against the first main valve seat 13.

Furthermore, when a refrigerant with high pressure is introduced into the high-pressure side U-turn path 16A via the port (high-pressure port at discharge side) pA, (the annular sealing surface of) a right surface of the low-pressure side slide valve body 15B is pressed against the valve seating surface of the second main valve seat 14 by the pressure applied from the refrigerant with high pressure in the high-pressure side U-turn path 16A. In detail, the right surface of the low-pressure side slide valve body 15B is pressed against the valve seating surface of the second main valve seat 14 by the differential pressure between the pressure applied from the refrigerant with high pressure flowing through the high-pressure side U-turn path 16A and the pressure applied from the refrigerant with low pressure flowing through the low-pressure side U-turn path 16B.

Note that, a biasing component to bias the high-pressure side slide valve body 15A and the low-pressure side slide valve body 15B in the opposite direction (direction to be separate) to each other may be arrange between the high-pressure side slide valve body 15A and the low-pressure side slide valve body 15B, for example, outside the O-ring 18.

The biasing component may be a ring-shaped leaf spring and compression coil spring, etc. By the biasing force of the biasing component, (the annular sealing surface of) a left surface of the high-pressure side slide valve body 15A can be pressure-welded (pressed) against the valve seating surface of the first main valve seat 13.

Note that, in the present example, a reinforcement pin 15d for shape retention is bridged in the front-back direction at substantially center of the low-pressure side U-turn path 16B of the low-pressure side slide valve body 15B (refer Figs. 3, 6, and 7). Furthermore, in the present example, a depressed surface 15e is formed on the upper and lower surfaces of (the high-pressure side slide valve body 15A and the low-pressure side slide valve body 15B configuring) the main valve body 15. A supporting plate 25c of (connectors 25A and 25B of) a connector 25 described later is fit into the depressed surface 15e with slight gaps in the right-left direction.

The high-pressure side slide valve body 15A and the low-pressure side slide valve body 15B are configured to move integrally in the axial direction O such that the main valve body 15 would selectively be at a cooling position (upper end position) in Fig. 1 and a heating position (lower end position) in Fig. 2. As illustrated in Fig. 1, the main valve body 15 at the cooling position (upper end position) opens the port pF and communicates the ports pB and pA via the high-pressure side U-turn path 16A of the high-pressure side slide valve body 15A. Furthermore, the main valve body 15 opens the port pE and communicates the ports pC and pD via the low-pressure side U-turn path 16B of the low-pressure side slide valve body 15B.

As illustrated in Fig. 2, the main valve body 15 at the heating position (lower end position) opens the port pB and communicates the ports pA and pF via the high-pressure side U-turn path 16A of the high-pressure side slide valve body 15A. Furthermore, the main valve body 15 opens the port pC and communicates the ports pD and pE via the low-pressure side U-turn path 16B of the low-pressure side slide valve body 15B.

In the main valve body 15, the high-pressure side slide valve body 15A is located right above the two ports (pB and pA, or pA and pF) among three ports except during the movement. The low-pressure side slide valve body 15B is located right above the two ports (pC and pD, or pD and pE) among three ports except during the movement. The high-pressure side slide valve body 15A and the low-pressure side slide valve body 15B are pressed toward right and left respectively and are pressure-welded to the valve seating surfaces of the first main valve seat 13 and the second main valve seat 14 respectively by the pressure from the refrigerant with high pressure introduced in the high-pressure side U-turn path 16A inside the main valve body 15.

The first piston 21 and the second piston 22 are connected to be integrally movable by the connector 25. The high-pressure side slide valve body 15A and the low-pressure side slide valve body 15B of the main valve body 15 are fit to and supported by the connector 25 in a state in which the high-pressure side slide valve body 15A and the low-pressure side slide valve body 15B are slightly freely slidable in the right-left direction and are not movable in the front-back direction.

In the present example, the connector 25 is formed of a pair of plates having same dimensions and same shapes made by, for example, press molding. The plates of the connector 25 are arranged along the right-left direction (direction orthogonal to the valve seating surface of the first main valve seat 13 and second main valve seat 14), that is, in parallel with the plane orthogonal to the valve seating surface. Furthermore, in the connector 25, the pair of plates are arranged to face each other in the front-back direction, and sandwich and hold the main valve body 15 therebetween in the front-back direction. Hereinafter, a plate arranged in front of the main valve body 15 is called the connector 25A, and a plate arranged on the back of the main valve body 15 is called the connector 25B.

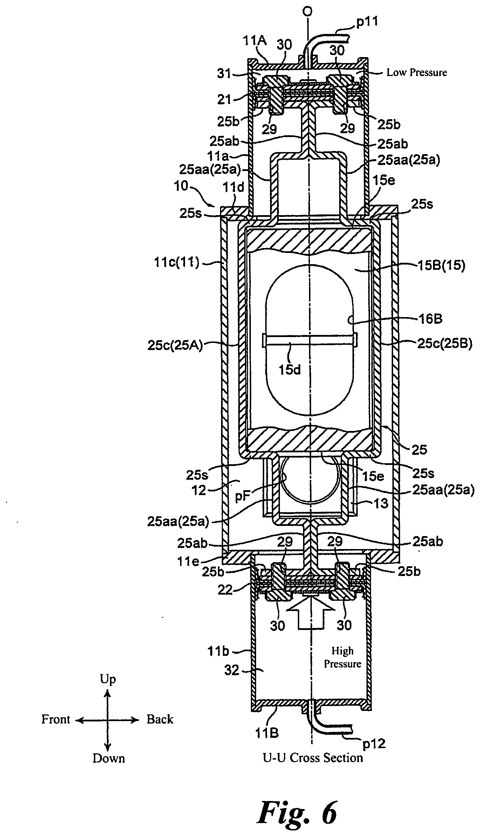

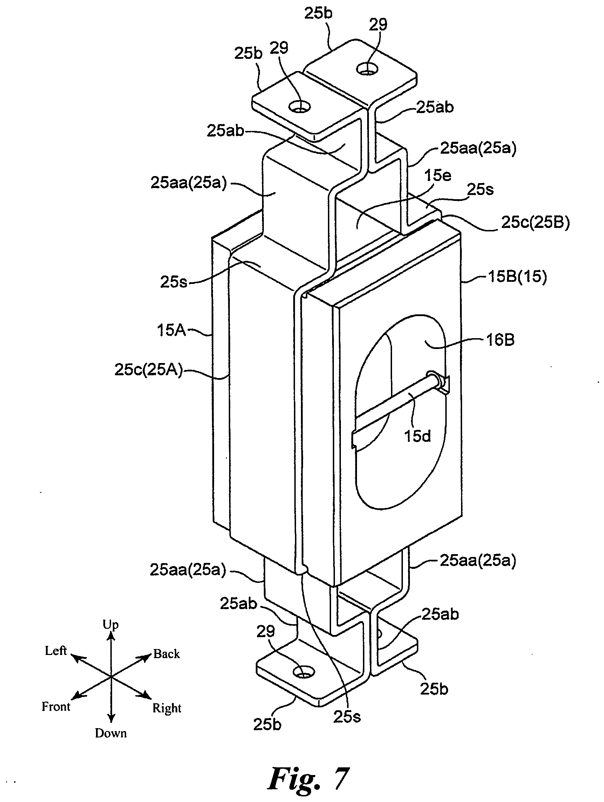

In detail, as it is clear from Figs. 1, 2, 6 and 7, the connectors 25A and 25B are configured of longitudinally rectangular (here, having same widths across entire length) plates which is symmetric relative to the center line (symmetry line) extending in the front-back direction from the center of the plates. The supporting member 25c is formed at substantially the center (in the vertical direction) of the connectors 25A and 25B to integrally movably engage and support a front-side portion or a back-side portion of the main valve body 15 in the axial direction O. As illustrated in Figs. 6 and 7, the supporting member 25c forms a shape along an outer circumference (front side, up side, and down side, or back side, up side, and down side) of the main valve body 15, that is, substantially U-shape in cross section. Width of the supporting member 25c in the right-left direction is set to be slightly smaller than the width of the depressed surface 15e provided on the upper and lower surfaces of the main valve body 15.

Connection members 25a extending to the first piston 21 or the second piston 22 are connected above or below the supporting member 25c in the connectors 25A and 25B. The connection members 25a are formed in step-shape or clank-shape by bending, etc. An offset plate 25aa and a contact plate 25ab are provided to the connection portion 25a from the supporting member 25c-side.

The offset plate 25aa of the connection portion 25a of the front-side connector 25A is arranged at the front side of the axis O, in particular, at a position offset to the front side of the six ports pA to pF opened on the valve seating surface of the first main valve seat 13 and the second main valve seat 14 (in other word, a position offset forwardly from the six ports pA to pF) when viewed from the right-left direction.

Furthermore, the offset plate 25aa of the connection portion 25a of the back-side connector 25B is arranged at the back side of the axis O, in particular, at a position offset to the back side of the six ports pA to pF opened on the valve seating surface of the first main valve seat 13 and the second main valve seat 14 (in other word, a position offset backwardly from the six ports pA to pF) when viewed from the right-left direction.

That is, in the present example, the offset plates 25aa of the connection portions 25a in the pair of connectors 25A and 25B are positioned to not obstruct a flow of the refrigerant flowing through the ports pB, pC, pE and pF opened on the valve seating surface of the first main valve seat 13 and the second main valve seat 14 (in particular, refer Fig. 6). In detail, in the cooling position (upper end position) illustrated in Fig. 1, the offset plate 25aa is positioned to not obstruct the flow of refrigerant in the ports pF and pE positioned at the lower side, and in the heating position (lower end position) illustrated in Fig. 2, the offset plate 25aa is positioned to not obstruct the flow of refrigerant in the ports pB and pC positioned at the upper side.

Furthermore, the contact plate 25ab of the connection member 25a in the connector 25A is in contact with the contact plate 25ab of the connection member 25a in the connector 25B. The contacts plates 25ab are portions close to the first piston 21 or the second piston 22 and are portions that do not overlap with the ports pA to pF opened on the valve seating surface of the first main valve seat 13 and the second main valve seat 14. Note that, for example, recesses and protrusions (matching portions), may be provided in the contact plates 25ab to match the facing connectors 25A and 25B to each other, in view of assemblability described later.

Attaching legs 25b are provided on upper and lower ends of the connection members 25a of the connectors 25A and 25B. The attaching legs 25b are bent substantially 90 degrees toward the opposite side to the facing connectors 25A and 25B (direction to which the supporting member 25c with uneven surface). Screw holes 29 are provided in the attaching legs 25b to insert bolts 30. As illustrated in Fig. 6, the bolts 30 are provided to connect the connectors 25A and 25B to the first piston 21 or the second piston 22.

As described above, in the present example, since the connectors 25A and 25B are configured of plates having same dimensions and same shapes, two connecters 25A and 25B can be arranged to face each other in the front-back direction. Furthermore, the contact plates 25ab of the connection portions 25a of the connectors 25A and 25B can be assembles and arranged to abut with each other reversely (in detail, up-side down to each other).

At this time, by respectively arranging the high-pressure side slide valve body 15A and the low-pressure side slide valve body 15B of the main valve body 15 from right-left direction between the supporting members 25c of the connectors 25A and 25B (in the substantially rectangular shape), the high-pressure side slide valve body 15A and the low-pressure side slide valve body 15B may be fit to the connectors 25 in a state slightly freely slidable in the right-left direction and not movable in the front-back direction (in particular, refer Fig. 7).

The main valve body 15 fit to and supported by the connectors 25A and 25B is presses and moved to an upper portion or a lower portion of the supporting member 25c with U-shape in cross section in the connectors 25A and 25B along with reciprocal movement of the first piston 21 and the second piston 22. That is, the upper and lower surface of the high-pressure side slide valve body 15A and the low-pressure side slide valve body 15B are pressed.

The pressed and moved main valve body 15 reciprocates between the cooling position (upper end position) and the heating position (lower end position). Note that, in the present example, although the connectors 25A and 25B are configured of the pair of plates having same dimensions and same shapes (connection plates 25A and 25B), the connector 25 may be configured of one plate, for example.

### [Configuration of Four-Way Pilot Valve 90]

As illustrated in Figs. 1 and 2, a four-way pilot valve 90 as a pilot valve has a valve casing 92, and an attractor 95, a compression coil spring 96, and a plunger 97 are arranged linearly from the base-side in this order. The valve casing 92 is formed of a cylindrical straight pipe to which an electromagnetic coil 91 is fit and fixed on an outer circumference thereof on the base side (left end side). A left end of the valve casing is joined to a brim (outer circumferential terrace portion) of the attractor 95 by welding so as to be sealed, and the attractor 95 is fastened to a cover casing 91A covering the outer circumference of the electromagnetic coil 91 for current excitation by a bolt 92B.

On the other hand, a lid 98 with filters is airtightly attached to a right-end opening of the valve casing 92 by welding, brazing, and fastening, etc. The lid 98 has a thin tube insertion opening to introduce the refrigerant with high pressure. A region surrounded by the lid 98, the plunger 97 and the valve casing 92 is a valve chamber 99. The refrigerant with high temperature and high pressure is introduced into the valve chamber 99 from the port pA via a high-pressure thin tube #a inserted airtightly into the thin tube insertion opening of the lid 98.

Furthermore, a valve seat 93, which an inner end surface thereof is a valve seating surface, is airtightly joined between the plunger 97 ad the lid 98 of the valve casing 92 by brazing, etc. Three ports are opened and aligned horizontally at even intervals on the valve seating surface (inner end surface) of the valve seat 93, and thin tubes #b, #c and #d are connected to the respective ports. The thin tube #b is connected to the first operation chamber 31 of the flow path valve main body 10, the thin tube #c is connected to the port pD, and the thin tube #d is connected to the second operation chamber 32 of the flow path valve main body 10.

The plunger 97 is basically a cylinder, is arranged opposite to the attractor, and is arranged freely slidably in the axial direction (direction along the center line of the valve casing 92) inside the valve casing 92. A valve body 94 is a component to switch communications between the ports by selectively communicating the adjacent ports among three ports opened on the valve seating surface of the valve seat 93. The valve body 94 slides in a state in contact with the valve seating surface of the valve seat 93 along with the right-left movement of the plunger 97 on the valve seating surface of the valve seat 93.

The compression coil spring 96 is arranged and is compressed between the attractor 95 and the plunger 97 and biases the plunger 97 in the direction away from the attractor 95 (rightward in Figs. 1 and 2), and in the present example, a left end of the valve seat 93 works as a stopper that prevents the rightward movement of the plunger 97. Note that this stopper may be achieved by applying other components.

### [Action of Four-Way Pilot Valve 90]

In the above-described four-way pilot valve 90, as illustrated in Fig. 1, when current to the electromagnetic coil 91 is OFF, the plunger 97 is pushed to a position at which the right end thereof contacts the valve seat 93 by biasing force of the compression spring coil 96, such that the valve body 94 communicates the adjacent ports among three ports opened on the valve seating surface of the valve seat 93.

When the current to the electromagnetic coil 91 is OFF, fluids with high pressure flowing into the port (high-pressure port at discharge side) pA are introduced to the second operation chamber 32 via the high-pressure thin tube #a, the valve chamber 99, the thin tube #d, and the port p12. Furthermore, the fluids with high pressure in the first operation chamber 31 are ejected from the port (low-pressure port at suction side) pD via the port p11, the thin tube #b, the port b, a convex portion 94a, the port c, and the thin tube #c.

In contrast, as illustrated in Fig. 2, when the current to the electromagnetic coil 91 is ON, the plunger 97 is pulled to a position at which the left end thereof contacts the attractor 95 by attraction force of the attractor 95 (against biasing force of the compression coil spring 96), such that the valve body 94 is moved. At this time, fluids with high pressure flowing into the port (high-pressure port at discharge side) pA are introduced to the first operation chamber 31 via the high-pressure thin tube #a, the valve chamber 99, the thin tube #b, and the port p11. Furthermore, the fluids with high pressure in the second operation chamber 32 are ejected from the port (low-pressure port at suction side) pD via the port p12, the thin tube #d, and the thin tube #c.

As described above, when current to the electromagnetic coil 91 is OFF, the main valve body 15 of the flow path valve main body 10 moves from the heating position to the cooling position to switch the flow path. Furthermore, when the current to the electromagnetic coil 91 is ON, the main valve body 15 of the flow path valve main body 10 moves from the cooling position to the heating position to switch the flow path.

By this, in the flow path switching valve 1 of the present embodiment, by switching ON/OFF of the current to the electromagnetic four-way pilot valve 95, the main valve body 15 can be moved inside the main valve chamber 12 by utilizing the differential pressure between the fluid with high pressure (fluid flowing in the port pA that is the high-pressure portion) and the fluid with low pressure (fluid flowing in the port pD that is the low-pressure portion). By this, communications among six ports provided in the main valve housing 11 in total can be switched. Thus, the heat-pump type air conditioning system 100 illustrated in Figs. 9(a) and 9(b) can be switched from the heating operation to the cooling operation and from the cooling operation to the heating operation.

### [Action of Flow path Valve Main Body]

Actions of the flow path valve main body 10 when the heat-pump type air conditioning system 100 is switched from the heating operation to the cooling operation and from the cooling operation to the heating operation are described. As illustrated in Fig. 2, when the valve main body 15 arranged inside the main valve housing 11 is at the heating position (lower end position), the second operation chamber 32 is communicated with the port pA that is the high-pressure port at discharge side via the four-way pilot valve 90. Furthermore, the first operation chamber 31 is communicated with the port pD that is the low-pressure port at suction side.

By this, refrigerants with high temperature and high pressure are introduced into the second operation chamber 32, while refrigerants with high pressure is ejected from the first operation chamber 31. Accordingly, as illustrated in Fig. 1, in the main valve chamber 12, the pressure inside the second operation chamber 32 becomes higher than the pressure in the first operation chamber 31, and the first piston 21, the second piston 22, and the main valve body 15 moves upward and the connector 25 contacts and is engaged with the upper connection plate 11d, so that the main valve body 15 is positioned at the cooling position (upper end position).

As a result, the ports pA and pD are communicated with each other via the high-pressure side U-turn path 16A, the ports pC and pD are communicated with each other via the low-pressure side U-turn path 16B, and the ports pE and pF are communicated with each other via the main valve chamber 12. By this, the heat-pump type air conditioning system 100 performs the cooling operation.

Meanwhile, when the valve main body 15 is at the cooling position (upper end position), the first operation chamber 31 is communicated with the port pA that is the high-pressure port at discharge side via the four-way pilot valve 90. Furthermore, the second operation chamber 32 is communicated with the port pD that is the low-pressure port at suction side. By this, refrigerants with high temperature and high pressure are introduced into the first operation chamber 31, while refrigerants with high pressure is ejected from the second operation chamber 32. Accordingly, as illustrated in Fig. 2, in the main valve chamber 12, the pressure inside the first operation chamber 31 becomes higher than the pressure in the second operation chamber 32, and the first piston 21, the second piston 22, and the main valve body 15 moves downward and the connector 25 contacts and is engaged with the lower connection plate 11e, so that the main valve body 15 is positioned at the heating position (lower end position).

As a result, the ports pA and pF are communicated with each other via the high-pressure side U-turn path 16A, the ports pE and pD are communicated with each other via the low-pressure side U-turn path 16B, and the ports pC and pB are communicated with each other via the main valve chamber 12. By this, the heat-pump type air conditioning system 100 performs the heating operation.

### [Action and Effect]

As understood from the above descriptions, the flow path switching valve 1 according to the first embodiment includes the tubular main valve housing 11 defining the main valve chamber 12, and the slide-type main valve body 15 arranged movably in an axial direction and in the main valve chamber 12, in which the main valve chamber 12 has three ports opened and aligned in the axial direction and has other three ports opened and aligned in the axial direction at the opposite side to the three ports across the axis, the main valve body 15 has the tubular high-pressure side slide valve body 15A and the low-pressure side valve body 15B freely slidably fit to the inner side of the high-pressure side slide valve body 15A, and the bridge 19, which connects the inner circumferential surfaces of the high-pressure side slide valve body 15A facing each other in the direction orthogonal to the axial direction of the main valve chamber 12, is provided on the inner circumferential surfaces.

As described above, in the flow path switching valve 1 according to the first embodiment, since the bridge 19 is provided on the inner circumferential surfaces of the high-pressure side slide valve body facing each other in the direction orthogonal to the axial direction of the main valve chamber 12, rigidity of the high-pressure side slide valve body 15A is improved. Therefore, the deformation amount of the high-pressure side slide valve body 15A which rigidity thereof was improved by providing the bridge 19 can be suppressed to little even if pressure from fluids with high pressure is applied to the inner circumferential surface of the high-pressure side slide valve body 15A such that the tip side of the high-pressure side slide valve body 15A tends to expand outwardly. Therefore, the deformation of the sealing surface of the high-pressure side slide valve body 15A can be suppressed, the sealing effect can be improved, and valve leakage of the main valve body 15 can be prevented. As a result, further improvement of the efficiency of the heat-pump type air conditioning system 100 can be achieved.

Furthermore, in the flow path switching valve 1 according to the first embodiment, since the bridge 19 is provided in the base portion of the high-pressure side slide valve body 15A, rigidity at a portion close to the sealing surface of the high-pressure side slide valve body 15A is improved. Therefore, the deformation of the sealing surface can be suppressed efficiently, the sealing effect is improved, and valve leakage of the main valve body 15 can be prevented.

In addition, the bridge 19 is formed of the end surface sandwiched by circular arcs of two openings only by providing the two openings which are respectively communicated with adjacent two ports provided in the end surface of the high-pressure side slide valve body 15A. Therefore, the bridge 19 does not inhibit a flow of fluid with high pressure passing through the ports. Accordingly, refrigerants with high pressure can smoothly flow via the high-pressure side U-turn path 16A, and pressure loss can be reduced.

Moreover, in the flow path switching valve 1 according to the first embodiment, by moving the main valve body 15 inside the main valve chamber 12, a plurality of communication state, in which two ports among three ports are selectively communicated via the high-pressure side U-turn path 16A, two ports among another three ports are selectively communicated via the low-pressure side U-turn path 16B, and the other one port among three ports and the other one port among another three ports may be selectively communicated via the main valve housing 11, may be selected.

Therefore, in the first embodiment, the first main valve seat 13 and the second main valve seat 14 to which ports are provided, and the main valve body 15 can be shorter in the axial direction in comparison with the flow path switching valve using conventional slide-type main valve bodies. Accordingly, surface accuracy and flatness of the valve seating surface of the first main valve seat 13 and the second main valve seat 14 and the sealing surface of the main valve body 15 can be easily ensured. As a result, valve leakage of the flow path switching valve 1 can be prevented, refrigerants with high pressure can be stably flown in the high-pressure side U-turn path 16A, and pressure loss can be reduced.

Additionally, in the present embodiment, since fluids (for example, refrigerant with low pressure) flowing inside the flow path valve main body 10 flow via the low-pressure side U-turn path 16B and fluids (for example, refrigerants with middle pressure) flow in the right-left direction (linearly) inside the main valve chamber, pressure loss can be reduced. In addition, in the flow path switching valve 1, since the O-ring 18 that is an annular sealing member is provided between the high-pressure side slide valve body 15A and the convex portion 15b of the low-pressure side slide valve body 15B, valve leakage can be further surely suppressed.

In addition to the above descriptions, when the flow path switching valve 1 according to the present embodiment is used in environments where refrigerants with high temperature and high pressure and refrigerants with low temperature and low pressure flow, such as the heat-pump type air conditioning systems, the high-pressure side U-turn path 16A through which refrigerants with high temperature and high pressure flows and the low-pressure side U-turn path 16B through which refrigerants with low temperature and low pressure flows may be largely separated, for example, without the metal main valve seat. Therefore, heat exchange amount (that is, heat loss) between refrigerants with high temperature and high pressure and refrigerants with low temperature and low pressure can be significantly reduced when compared with the conventional heat-pump type air conditioning systems in which refrigerants with high temperature and high pressure and refrigerants with low temperature and low pressure flow in a state close to each other via the metal main valve seat. As a result, efficiency of the heat-pump type air conditioning system 100 can be further improved.

Furthermore, in the main valve body 15 of the flow path switching valve 1 according to the present embodiment, the high-pressure side slide valve body 15A and the low-pressure side slide valve body 15B are arranged back-to-back to each other so that the high-pressure side U-turn path 16A and the low-pressure side slide valve body 16B face opposite side to each other. Therefore, fluids with high pressure introduced between the high-pressure side slide valve body 15A and the low-pressure side slide valve body 15B push the high-pressure side slide valve body 15A and the low-pressure side slide valve body 15B to the first main valve seat 13 and the second main valve seat 14, respectively.

Also, in high-pressure side slide valve body 15A according to the first embodiment, since the bridge 19 is provided in the base portion, pressure of fluids with high pressure is applied to the bridge 19, and the left surface of the high-pressure side slide valve body 15A is strongly pushed against the first main valve seat 13. By such an action of fluid with high pressure, sealing effect of the main valve body 15 is improved, and the valve leakage thereof can be suppressed. In addition, since heat loss between refrigerants with high temperature and high pressure and refrigerants with low temperature and low pressure can be reduced, efficiency of the heat-pump type air conditioning system 100 can be further improved.

### [Second Embodiment]

Basic configurations of a flow path switching valve 1 according to a second embodiment is the same as that of the above first embodiment. Therefore, same components are labeled by same signs and descriptions thereof are omitted, and only differences are described.

### [Configuration]

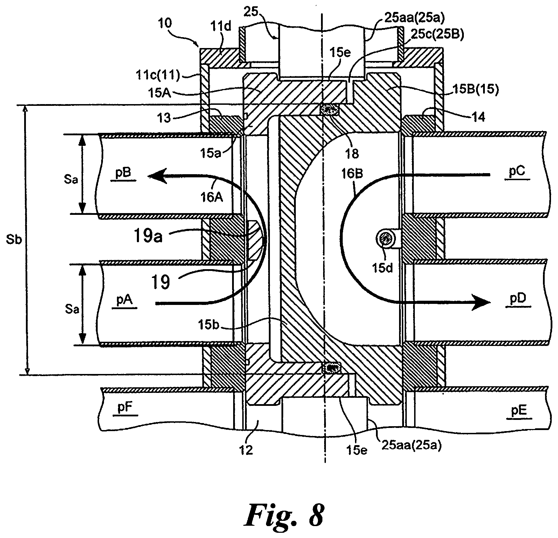

As illustrated in Fig. 8, representing the present invention, in the flow path switching valve 1 according to the second embodiment a curved portion 19a having a dome-shape in cross section which is curved and protruding toward the low-pressure side slide valve body 15B is formed in the bridge 19.

### [Action and Effect]

The flow path switching valve 1 according to the second embodiment has the following specific actions and effects. That is, in the second embodiment, the curved portion 19a is formed in the bridge 19. The curved portion 19a forms a dome-shape in cross section which is curved and protruding toward the low-pressure side slide valve body 15B. Therefore, the bridge 19 has an inclined surface curving along the shape of the high-pressure side U-turn path 16A. Accordingly, the bridge 19 does not inhibit a flow of fluid with high pressure introduced to he high-pressure side U-turn path 16A. By this, refrigerants with high pressure can smoothly flow via the high-pressure side U-turn path 16A, and pressure loss can be reduced.

### [Other Embodiment]

Above-described embodiments are presented as examples of embodiments of the present disclosure, and embodiments of the present disclosure can be implemented in other various forms. For example, in the first and second embodiments, although the bridge 19 is formed integrally with the high-pressure side slide valve body 15A by providing two openings which are respectively communicated with adjacent two ports in the end surface of the high-pressure side slide valve body 15A, it is not limited thereto.

For example, a member that configures the bridge 19 may be separate from the high-pressure side slide valve body 15A, and the member that configures the bridge 19 may be attached to the high-pressure side slide valve body 15A. Configurations, shapes, and dimensions of the bridge 19 may be changed as appropriate, and the bridge 19 may be formed by a plurality of members.

Furthermore, in the first embodiment, although configuration in which the main valve body 15 is driven inside the main valve chamber 12 using four-way pilot valve 90 is described, the main valve body 15 may be driven inside the main valve chamber 12 using motors instead of the four-way pilot valve 90.

### REFERENCE SIGN

1: flow path switching valve
10: flow path valve main body
11: main valve housing
11A: upper end lid member
11B: lower end lid member
12: main valve chamber
13: first main valve seat
14: second main valve seat
15: main valve body
15A: high-pressure side slide valve body
15B: low-pressure side slide valve body
15a: inner brim
15b: convex portion
16A: high-pressure side U-turn path
16B: low-pressure side U-turn path
18: O-ring
19: bridge
19a: curved portion
21: first piston
22: second piston
25: connector
25A, 25B: connection plate
31: first operation chamber
32: second operation chamber
90: four-way pilot valve
pA, pB, pC, pD, pE, pF: port
100: heat-pump type air conditioning system

## Claims

1. A flow path switching valve (1) comprising:
a main valve housing (11) defining a main valve chamber (12); and
a slide-type main valve body (15) arranged movably in an axial direction (O) and in the main valve chamber (12),
wherein:
the main valve chamber (12) has three ports (pA, pB, pF) opened and aligned in the axial direction (O) and has other three ports (pB, pC, pD) opened and aligned in the axial direction (O) at the opposite side to the three ports (pA, pB, pF) across an axis, and the ports communicated with each other are switched by moving the main valve body (15) inside the main valve chamber (12),
the main valve body (15) has a tubular high-pressure side slide valve body (15A) and a low-pressure side valve body (15B) freely slidably fit to an inner side of the high-pressure side slide valve body (15A),
a bridge (19), which connects inner circumferential surfaces of the high-pressure side slide valve body (15A) facing each other in a direction orthogonal to the axial direction (O), is provided on the inner circumferential surfaces,
a convex portion (15b) protruding toward a high-pressure side slide valve body-side (15A) is provided in the low-pressure side slide valve body (15B), **characterized in that**
a high-pressure side U-turn path (16A) to which fluid with high pressure is introduced is defined in a space surrounded by the convex portion (15b) and the inner circumferential surface of the high-pressure side slide valve body (15A),
a curved portion (19a) having a dome-shape in cross section which is curved and protruding toward the low-pressure side slide valve body (15B) is formed in the bridge (19).

2. The flow path switching valve (1) according to claim 1, wherein when an end of the high-pressure side slide valve body (15A) at a low-pressure side valve body-side (15B) is a tip portion and an end of the high-pressure side slide valve body (15A) opposite to the tip portion is a base portion, the bridge (19) is provided on the base portion of the high-pressure side slide valve body (15A).

3. The flow path switching (1) valve according to any one of claims 1 to 2, wherein the bridge (19) is formed by providing two openings which are respectively communicated with the adjacent two ports in an end surface of the high-pressure side slide valve body (15A).

4. The flow path switching valve (1) according to any one of claims 1 to 3, wherein, by moving the main valve body (10) inside the main valve chamber (12), a plurality of communication state, in which two ports among three ports are selectively communicated via the high-pressure side U-turn path (16A) to which fluids with relatively high pressure is introduced, two ports among another three ports are selectively communicated via a low-pressure side U-turn path (16B) to which fluids with relatively low pressure is introduced, and the other one port among three ports and the other one port among another three ports may be selectively communicated via the main valve housing (11), is selected.

5. The flow path switching (1) valve according to any one of claims 1 to 4, wherein a sealing member is provided between the high-pressure slide valve body (15A) and the low-pressure slide valve body (15B).

## Patentansprüche

1. Ein Strömungsweg-Umschaltventil (1), umfassend:
ein Hauptventilgehäuse (11), das eine Hauptventilkammer (12) definiert; und
einen schieberartigen Hauptventilkörper (15), der in axialer Richtung (O) beweglich in der Hauptventilkammer (12) angeordnet ist,
wobei:
die Hauptventilkammer (12) drei Öffnungen (pA, pB, pF) aufweist, die geöffnet und in axialer Richtung (O) ausgerichtet sind, und weitere drei Öffnungen (pB, pC, pD) aufweist, die auf der gegenüberliegenden Seite zu den drei Öffnungen (pA, pB, pF) über eine Achse hinweg geöffnet und in axialer Richtung (O) ausgerichtet sind, und die miteinander kommunizierenden Öffnungen durch Bewegen des Hauptventilkörpers (15) innerhalb der Hauptventilkammer (12) umgeschaltet werden,
der Hauptventilkörper (15) einen rohrförmigen Hochdruck-Seitenschieberventilkörper (15A) und einen Niederdruck-Seitenschieberventilkörper (15B) umfasst, der frei gleitend an einer Innenseite des Hochdruck-Seitenschieberventilkörpers (15A) angepasst ist,
eine Brücke (19), die innere Umfangsflächen des Hochdruck-Seitenschieberventilkörpers (15A), die sich in einer Richtung orthogonal zur axialen Richtung (O) gegenüberliegen, verbindet, auf den inneren Umfangsflächen vorgesehen ist,
einen konvexen Abschnitt (15b), der sich zu einem Hochdruck-Seitenschieberventilkörper (15A) hin erstreckt, im Niederdruck-Seitenschieberventilkörper (15B) vorgesehen ist,
**dadurch gekennzeichnet, dass**
ein Hochdruck-Seiten-Umlenkkanal (16A), in den Fluid mit hohem Druck eingeführt wird, in einem Raum definiert ist, der von dem konvexen Abschnitt und der inneren Umfangsfläche des Hochdruck-Seitenschieberventilkörpers (15A) umgeben ist,
ein gebogener Abschnitt (19a) mit kuppelförmigem Querschnitt, der sich zum Niederdruck-Seitenschieberventilkörper (15B) hin wölbt und vorspringt, in der Brücke (19) ausgebildet ist.

2. Das Strömungsweg-Umschaltventil (1) gemäß Anspruch 1, wobei, wenn ein Ende des Hochdruck-Seitenschieberventilkörpers (15A) an der Niederdruck-Seite (15B) ein Spitzenabschnitt ist und ein Ende des Hochdruck-Seitenschieberventilkörpers (15A), das dem Spitzenabschnitt gegenüberliedt ein Basisabschnitt ist, die Brücke (19) am Basisabschnitt des Hochdruck-Seitenschieberventilkörpers (15A) vorgesehen ist.

3. Das Strömungsweg-Umschaltventil (1) gemäß einem der Ansprüche 1 bis 2, wobei die Brücke (19) durch zwei Öffnungen gebildet ist, die jeweils mit den benachbarten zwei Öffnungen an einer Stirnfläche des Hochdruck-Seitenschieberventilkörpers (15A) kommunizieren.

4. Das Strömungsweg-Umschaltventil (1) gemäß einem der Ansprüche 1 bis 3, wobei durch Bewegen des Hauptventilkörpers (15) innerhalb der Hauptventilkammer (12) ein Mehrfach-Kommunikationszustand ausgewählt wird, in dem zwei Öffnungen von drei Öffnungen selektiv über den Hochdruck-Seiten-Umlenkkanal (16A), in den Fluid mit relativ hohem Druck eingeführt wird, miteinander kommuniziert werden, zwei Öffnungen von anderen drei Öffnungen selektiv über einen Niederdruck-Seiten-Umlenkkanal (16B), in den Fluid mit relativ niedrigem Druck eingeführt wird, miteinander kommuniziert werden, und die jeweils andere eine Öffnung von drei Öffnungen und die jeweils andere eine Öffnung von anderen drei Öffnungen selektiv über das Hauptventilgehäuse (11) miteinander kommuniziert werden können.

5. Das Strömungsweg-Umschaltventil (1) gemäß einem der Ansprüche 1 bis 4, wobei ein Dichtelement zwischen dem Hochdruck-Seitenschieberventilkörper (15A) und dem Niederdruck-Seitenschieberventilkörper (15B) vorgesehen ist.

## Revendications

1. Soupape de commutation de trajet d'écoulement (1) comportant :
un boîtier de soupape principal (11) définissant une chambre de soupape principale (12) ; et
un corps de soupape principal de type tiroir (15) agencé de manière mobile dans une direction axiale (O) et dans la chambre de soupape principale (12),
dans laquelle :
la chambre de soupape principale (12) a trois orifices (pA, pB, pF) ouverts et alignés dans la direction axiale (O) et a trois autres orifices (pB, pC, pD) ouverts et alignés dans la direction axiale (O) du côté opposé aux trois orifices (pA, pB, pF) sur un axe, et les orifices en communication les uns avec les autres sont commutés en déplaçant le corps de soupape principal (15) à l'intérieur de la chambre de soupape principale (12),
le corps de soupape principal (15) a un corps de soupape à tiroir tubulaire côté haute pression (15A) et un corps de soupape côté basse pression (15B) monté librement de manière coulissante sur un côté intérieur du corps de soupape à tiroir côté haute pression (15A),
un pontet (19), qui relie des surfaces circonférentielles intérieures du corps de soupape à tiroir côté haute pression (15A) se faisant face dans une direction orthogonale à la direction axiale (O), est disposé sur les surfaces circonférentielles intérieures,
une partie convexe (15b) faisant saillie vers un côté de corps de soupape à tiroir côté haute pression (15A) est prévue dans le corps de soupape à tiroir côté basse pression (15B), et **caractérisée en ce que**
un trajet de demi-tour côté haute pression (16A) dans lequel du fluide à haute pression est introduit, est défini dans un espace entouré par la partie convexe (15b) et la surface circonférentielle intérieure du corps de soupape à tiroir côté haute pression (15A),
une partie incurvée (19a) ayant une forme de dôme en coupe transversale qui est incurvée et fait saillie vers le corps de soupape à tiroir côté basse pression (15B), est formée dans le pontet (19).

2. Soupape de commutation de trajet d'écoulement (1) selon la revendication 1, dans laquelle lorsqu'une extrémité du corps de soupape à tiroir côté haute pression (15A) du côté du corps de soupape côté basse pression (15B) est une partie d'embout et qu'une extrémité du corps de soupape à tiroir côté haute pression (15A) opposée à la partie d'embout est une partie de base, le pontet (19) est disposé sur la partie de base du corps de soupape à tiroir côté haute pression (15A).

3. Soupape de commutation de trajet d'écoulement (1) selon l'une quelconque des revendications 1 à 2, dans laquelle le pontet (19) est formé en disposant deux ouvertures qui sont respectivement en communication avec les deux orifices adjacents dans une surface d'extrémité du corps de soupape à tiroir côté haute pression (15A).

4. Soupape de commutation de trajet d'écoulement (1) selon l'une quelconque des revendications 1 à 3, dans laquelle, en déplaçant le corps de soupape principal (10) à l'intérieur de la chambre de soupape principale (12), une pluralité d'états de communication, dans lesquels deux orifices parmi trois orifices sont sélectivement en communication via le trajet de demi-tour côté haute pression (16A) dans lequel des fluides à pression relativement élevée sont introduits, deux orifices parmi les trois autres orifices sont sélectivement en communication via un trajet de demi-tour côté basse pression (16B) dans lequel des fluides à pression relativement basse sont introduits, et l'autre orifice parmi les trois autres orifices peut être sélectivement en communication via le boîtier de soupape principal (11), est sélectionnée.

5. Soupape de commutation de trajet d'écoulement (1) selon l'une quelconque des revendications 1 à 4, dans laquelle un élément d'étanchéité est disposé entre le corps de soupape à tiroir côté haute pression (15A) et le corps de soupape à tiroir côté basse pression (15B).
